Europäisches Patentamt

European Patent Office

Office européen des brevets

(19)

(11) Publication number: **0 281 247**

**A2**

(12) **EUROPEAN PATENT APPLICATION**

(21) Application number: **88300867.4**

(51) Int. Cl.⁴: **G01N 27/46**

(22) Date of filing: **02.02.88**

| | |
|---|---|
| The title of the invention has been amended (Guidelines for Examination in the EPO, A-III, 7.3). | (71) Applicant: **UNITED KINGDOM ATOMIC ENERGY AUTHORITY**<br>**11 Charles II Street**<br>**London SW1Y 4QP(GB)** |
| (30) Priority: **02.03.87 GB 8704874** | (72) Inventor: **Moseley, Patrick Timothy**<br>**Ivy Cottage South Row**<br>**Chilton, Oxfordshire(GB)** |
| (43) Date of publication of application:<br>**07.09.88 Bulletin 88/36** | Inventor: **Tappin, Gillian**<br>**30 Priory Orchard**<br>**Wantage Oxfordshire(GB)** |
| (84) Designated Contracting States:<br>**BE DE FR IT NL** | (74) Representative: **Bennett, Clive Stephen**<br>**United Kingdom Atomic Energy Authority**<br>**Patent Branch 11, Charles II Street**<br>**London, SW1Y 4Qp(GB)** |

(54) **Gas sensors.**

(57) The present invention relates to sensors and more particularly to gas sensors suitable for use in gases and gaseous mixtures.

The present invention provides a gas sensor comprising a liquid electrolyte and two or more electrodes in communication with the said liquid electrolyte and capable of being contacted with a gas or gaseous mixture, the arrangement being such that two or more of the electrodes produce different potentials when in contact with the said gas or gaseous mixture.

A liquid electrolyte may be, for example, a thin film of water, or a thin film of an aqueous solution, in communication with the electrodes.

Fig.1.

## SENSORS

The present invention relates to sensors and more particularly to gas sensors suitable for use in gases and gaseous mixtures.

According to one aspect of the present invention there is provided a gas sensor comprising a liquid electrolyte and two or more electrodes in communication with the said liquid electrolyte and capable of being contacted with a gas or gaseous mixture, the arrangement being such that two or more of the electrodes produce different potentials when in contact with the said gas or gaseous mixture.

The liquid electrolyte may be, for example, in the form of a thin layer or thin film. For example, the thin layer or film may be up to about a micron in thickness.

Where the liquid electrolyte is in the form of a thin layer or thin film it is preferably supported by a support material.

By way of example the liquid electrolyte may comprise a thin film of water, or a thin film of an aqueous solution.

Further, by way of example, a liquid electrolyte may be formed by forming a thin layer of water, or a thin layer of an aqueous solution, on a support material; thus, for example, a thin layer of water may be formed by deposition as moisture, for example, from the environment.

The support material may be, for example, any material which is capable of supporting a layer or film of liquid electrolyte and which does not interfere, or does not interfere unacceptably, with the operation of the gas sensor. For example, the support material may be tin oxide, zinc oxide or aluminium oxide. Optionally, the support material may be porous to facilitate retention of a liquid electrolyte.

By way of further example, the support material may be an organic membrane. For example the organic membrane may be a perfluoro sulphonic acid membrane (such as that available under the Trade Name "Nafion"), a cationic exchange resin (such as that available under the Trade Name "Raipore") or a hydrophilic microporous film (such as that available under the Trade Name "Celguard").

The electrodes may be arranged to produce different potentials when in contact with the common gas or gaseous mixture such that the sensor is a mixed potential gas sensor, for example, by arranging for the electrodes to be of different size, or by arranging for the electrodes to be of different materials (e.g. Pt or Au or Ni), or by arranging for the rate of diffusion to and/or from one electrode to be different (e.g. by use of a porous diffusion "barrier" at one electrode).

A gas sensor in accordance with the present invention may be used in quantitative and/or qualitative determinations with gases and gaseous mixtures.

The electrodes may be in direct communication with the liquid electrolyte by being in contact therewith.

It will be appreciated that the potentials developed at each electrode are due to the electrode reactions with constituents in the gas or gaseous mixtures.

By way of example a sensor in accordance with the present invention may be used to detect, in air, gases such as hydrogen, carbon monoxide, $NH_3$, $SO_2$ and $H_2S$.

The sensor may, for example, include a means for measuring the potentials, or difference in potentials developed, by the electrodes.

The means for measuring the potential produced may be, for example, a high impedance voltmeter (e.g. digital voltmeter (DVM)) the impedance of which allows a rest voltage to be shown (e.g. a rest voltage of say about 100 millivolt may be arranged to be shown by a voltmeter).

It will be appreciated that, as an alternative to measuring potential or voltage, current may be measured. Thus, for example changes in current from the sensor may be used to detect the presence or absence of a gas.

Thus the sensor may include, for example, a mean for measuring current.

A support material for use in accordance with the present invention may be, for example, prepared by pressing a suitable material in powder form (e.g. to form a disc, plate or pellet which disc, plate or pellet may optionally be porous).

According to another aspect of the present invention there is provided a method of sensing a gas which comprises contacting a sensor with the gas and measuring the electrical potential response of the sensor, said sensor comprising a liquid electrolyte, and two or more electrodes in communication with the said liquid electrolyte, the arrangement being such that two or more of the electrodes produce different potentials when in contact with the gas, and said electrolyte and said electrodes being in contact with the gas.

In accordance with the present invention it is believed that, where the electrolyte is a thin layer of water (e.g. moisture from the atmosphere) or a thin layer of an aqueous solution, a rest potential may be observed due to the output of an electrochemical cell comprising the electrodes and the thin layer of water. It is believed that the observed gas responses are generated by various reactions at the electrodes to give different potentials and thereby provide a gas sensitive "mixed potential".

It is to be understood that a sensor device in accordance with the present invention can operate at substantially room temperature and thus the requirement of providing a heating means may be avoided.

It is also to be understood that since the measured voltage or current is developed by the sensor the requirement of providing an external electrical supply as is necessary in the case of a sensor working on, for example, resistivitiy changes, is substantially avoided (i.e. a device in accordance with the present invention may be substantially "self-powered").

It will be appreciated that in operation a gas to be detected or gaseous mixture containing a gas to be detected may be passed over a sensor in accordance with the present invention and the potentials generated used to detect the presence of the gas.

The voltage is preferably measured using a voltmeter of impedance such that a rest voltage is measureable.

For example, it is possible to arrange for a rest voltage to be shown in air (e.g. 100 mV) so that the introduction of other gases into air may be detected.

The potential developed is believed to be related to the concentration in the gaseous mixture of gas which gives reaction at the electrodes. Thus it is possible, for example, to detect gases (e.g. $H_2$, CO, $NH_3$, $SO_2$ and $H_2S$) in air.

As hereinbefore disclosed, current from the sensor may be measured as an alternative to measuring voltage.

Sensors in accordance with the present invention are believed to be less prone to moisture "poisoning" than are resistance modulating devices.

The invention will now be further described, by way of example only, with reference to Figures 1 to 11 of the accompanying drawings and with reference to the Examples 1 to 10.

In the Drawings:

Figure 1 is a diagrammatic representation of one form of gas sensor in accordance with the invention;

Figure 2 shows the voltage response of a sensor in accordance with the invention to 1% hydrogen in air;

Figure 3 shows the voltage response of a sensor in accordance with the present invention to 1% hydrogen in air;

Figure 4 shows the voltage response of a sensor in accordance with the present invention to 1% CO in air;

Figure 5 shows the voltage response of a sensor in accordance with the present invention to 0.1% $H_2S$ in air;

Figure 6 shows the voltage response of a sensor in accordance with the present invention to 1% $H_2$ in air;

Figure 7 shows the voltage response of a sensor in accordance with the present invention to 1% CO in air;

Figure 8 shows the voltage response of a sensor in accordance with the present invention to 0.1% $H_2S$ in air;

Figure 9 shows the voltage response of a sensor in accordance with the present invention to air saturated with $C_2H_5OH$ at 20°C;

Figure 10 shows the voltage response of a sensor in accordance with the present invention to 1% $NH_3$ in air; and

Figure 11 shows the voltage response of a sensor in accordance with the present invention to 1% $H_2$ in air.

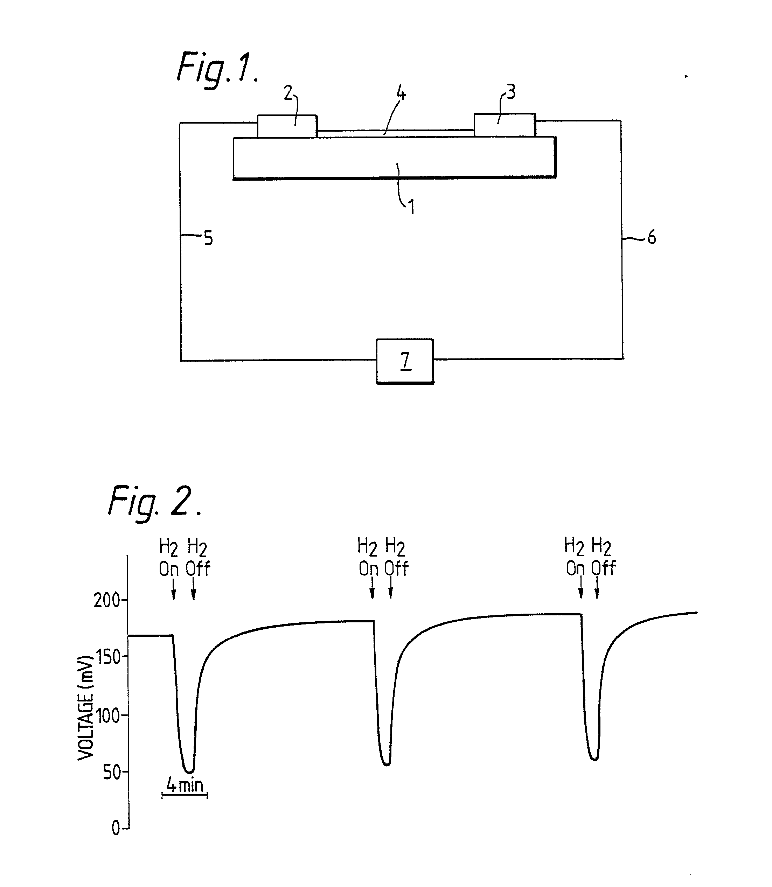

Referring now to Figure 1 of the accompanying drawings there is shown a gas sensor having a support material 1 in contact with an electrode 2 and an electrode 3. The electrodes 2 and 3 are in communication with a thin film of liquid electrolyte 4.

Conductors 5 and 6 are provided to connect the electrodes 2 and 3 to a voltage measuring means 7 for measuring voltage from the sensor.

In operation a gas to be detected or a gaseous mixture containing a gas to be detected is passed over the sensor, a different potential is developed at each electrode 2 and 3 and the resulting mixed potential is detected by means 7.

EXAMPLE 1

A sensor of the form shown in Figure 1 of the accompanying drawings was used to detect hydrogen in air.

The sensor had a support material of tin dioxide having a Au electrode provided by sputtering and a Pt electrode provided by sputtering. The Au and Pt were connected to a voltage measuring device (DVM) via Cu wires.

A thin film of water was allowed to form from the atmosphere onto the tin dioxide and between the electrodes to serve as a liquid electrolyte.

The sensor was placed in an enclosure and alternately air and air containing 1% hydrogen was passed over the sensor.

The voltage response of this sensor is shown in Figure 2. With air passing over the sensor a rest voltage was observed as shown; upon contacting the sensor with 1% $H_2$ in air the voltage decreased as shown in Figure 2.

It will be appreciated that "H₂ ON" and "H₂ OFF" in Figure 2 indicate respectively the point in time at which air containing 1% H₂ was introduced to the sensor and the point in time at which air containing 1% H₂ was replaced by air.

## EXAMPLE 2

A sensor of the form shown in Figure 1 of the accompanying drawings was used to detect hydrogen in air.

The sensor had a support material of WO₃ having sputtered Au and Pt electrodes.

A thin film of water was allowed to form from the atmosphere onto the WO₃ and between the electrodes to serve as a liquid electrolyte.

The sensor was placed in an enclosure and alternately air and air containing 1% hydrogen was passed over the sensor.

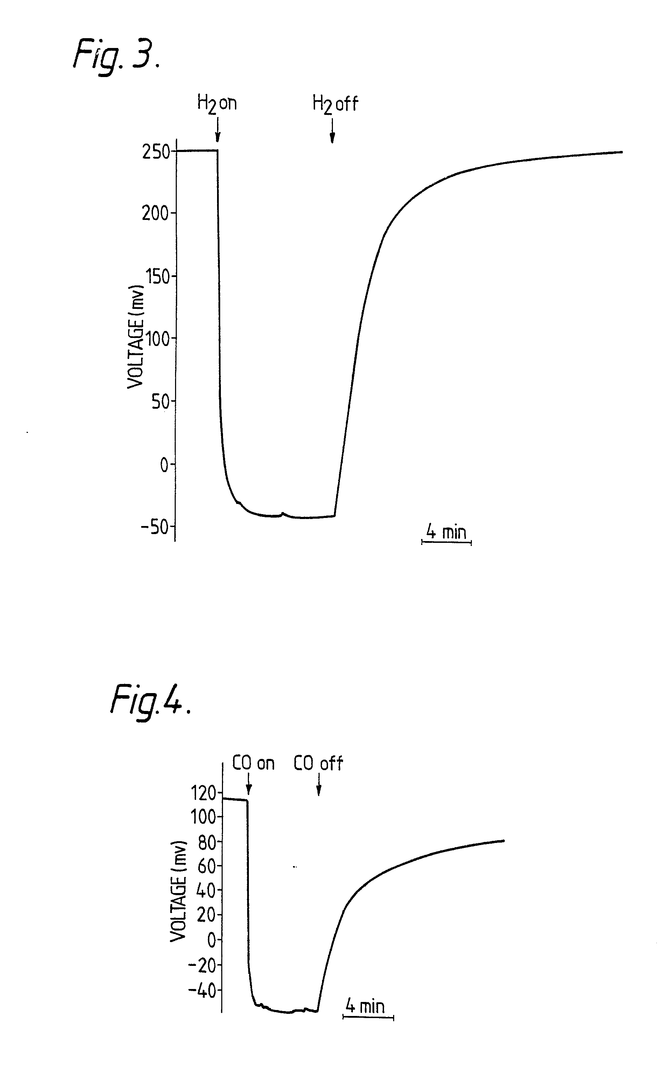

The voltage response of the·sensor device to H₂ is shown in Figure 3.

With air passing over the sensor a rest voltage was observed as shown; upon contacting the sensor with 1% hydrogen in air the voltage decreased as shown in Figure 3.

It will be appreciated that "H₂ ON" and "H₂ OFF" in Figure 3 indicate respectively the point in time at which air containing 1% H₂ was introduced to the sensor and the point in time at which air containing 1% H₂ was replaced by air.

## EXAMPLE 3

The procedure of Example 2 was followed using a sensor of the type used therein (i.e. Au/WO₃/Pt) with the exception that air containing hydrogen was not used and alternately air and air containing 1% carbon monoxide was passed over the sensor.

The voltage response of the sensor to CO is shown in Figure 4.

With air passing over the sensor a rest voltage was observed as shown; upon contacting the sensor with 1% CO in air the voltage decreased as shown in Figure 4.

It will be appreciated that "CO ON" and "CO OFF" in Figure 4 indicate respectively the point in time at which air containing 1% CO was introduced to the sensor and the point in time at which air containing 1% CO was replaced by air.

## EXAMPLE 4

The procedure of Example 2 was followed using a sensor of the type used therein (i.e. Au/WO₃/Pt) with the exception that air containing CO was not used and alternately air and air containing 0.1% hydrogen sulphide was passed over the sensor.

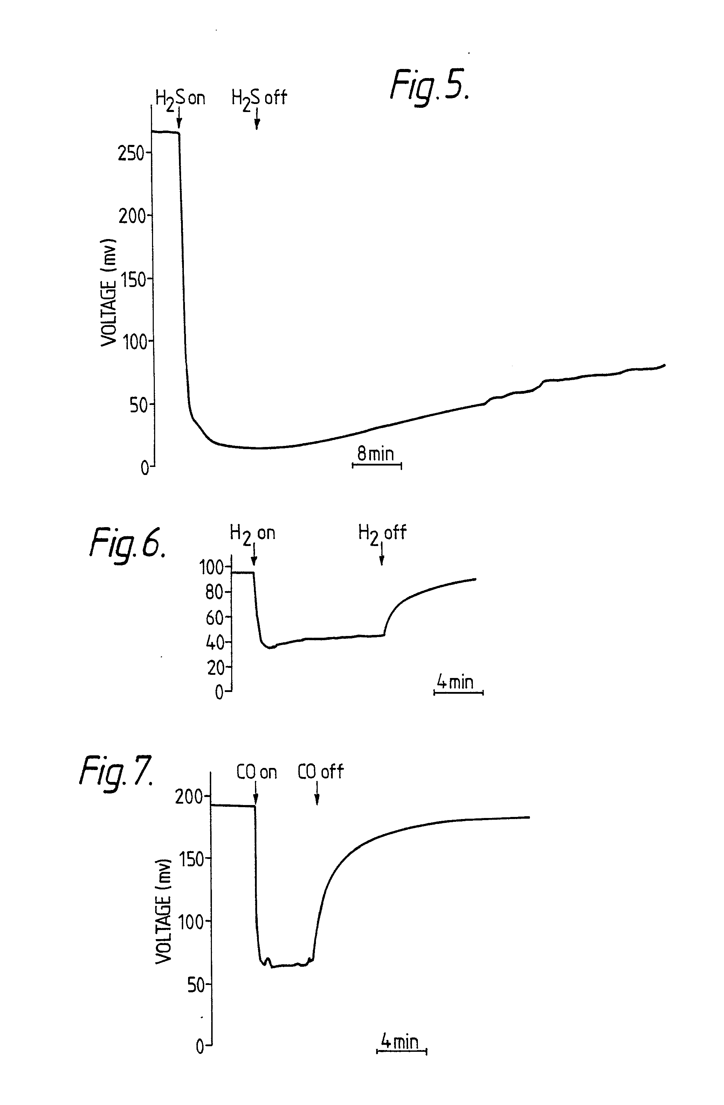

This voltage response of the sensor to H₂S is shown in Figure 5.

With air passing over the sensor a rest voltage was observed as shown; upon contacting the sensor with 0.1% H₂S in air the voltage decreased as shown in Figure 5.

It will be appreciated that "H₂S ON" and "H₂S OFF" in the Figure 6 indicate respectively the point in time at which air containing 0.1% H₂S was introduced to the sensor and the point in time at which air containing 0.1% H₂S was replaced by air.

## EXAMPLE 5

A sensor of the form shown in Figure 1 of the accompanying drawings was used to detect hydrogen in air.

The sensor had a support material of ZnO having sputtered Au and Pt electrodes.

A thin film of water was allowed to form from the atmosphere onto the ZnO and between the electrodes to serve as a liquid electrolyte.

The sensor was placed in an enclosure and alternately air and air containing 1% hydrogen was passed over the sensor.

The voltage response of the sensor to H₂ is shown in Figure 6.

With air passing over the sensor a rest voltage was observed as shown; upon contacting the sensor with 1% hydrogen in air the voltage decreased as shown in Figure 6.

It will be appreciated that "H₂ ON" and "H₂ OFF" in Figure 6 indicate respectively the point in time at which air containing 1% H₂ was introduced to the sensor and the point in time at which air containing 1% H₂ was replaced by air.

## EXAMPLE 6

The procedure of Example 5 was followed using a sensor of the type used therein (i.e. Au/ZnO/Pt) with the exception that air containing hydrogen was not used and alternately air and air containing 1% carbon monoxide was passed over the sensor.

The voltage response of the sensor to CO is shown in Figure 7.

With air passing over the sensor a rest voltage was observed as shown; upon contacting the sensor with 1% CO in air the voltage decreased as shown in Figure 7.

It will be appreciated that "CO ON" and "CO OFF" in Figure 7 indicate respectively the point in time at which air containing 1% CO was introduced to the sensor and the point in time at which air containing 1% CO was replaced by air.

EXAMPLE 7

The procedure of Example 5 was followed using a sensor of the type used therein (i.e. Au/ZnO/Pt) with the exception that air containing hydrogen was not used and alternately air and air containing 0.1% hydrogen sulphide was passed over the sensor.

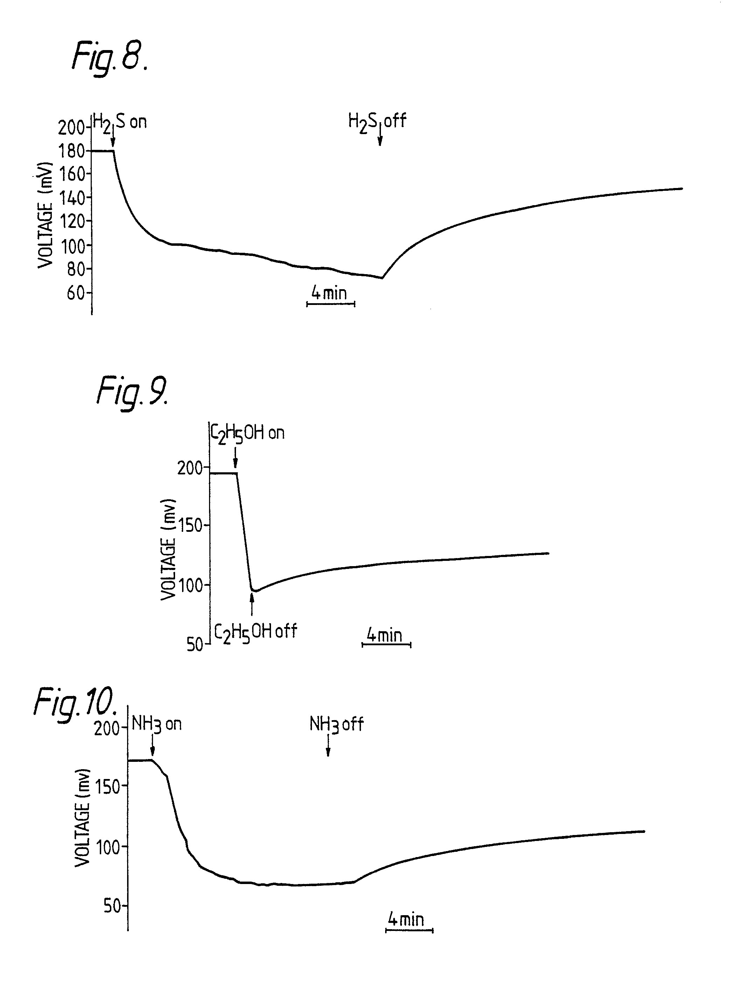

The voltage response of the sensor to $H_2S$ is shown in Figure 8.

With air passing over the sensor a rest voltage was observed as shown; upon contacting the sensor with 0.1% $H_2S$ in air the rest voltage decreased as shown in Figure 8.

It will be appreciated that "$H_2S$ ON" and "$H_2S$ OFF" in Figure 8 indicate respectively the point in time at which air containing 0.1% $H_2S$ was introduced to the sensor and the point in time at which air containing 0.1% $H_2S$ was replaced by air.

EXAMPLE 8

The procedure of Example 5 was followed using a sensor of the type used therein (i.e. Au/ZnO/Pt) with the exception that air containing hydrogen was not used and alternately air and air saturated with $C_2H_5OH$ at 20°C was passed over the sensor.

The voltage response of the sensor to air saturated with $C_2H_5OH$ at 20°C is shown in Figure 9.

With air passing over the sensor a rest voltage was observed as shown; upon contacting the sensor with the $C_2H_5OH$ in air the voltage decreased as shown in Figure 9.

It will be appreciated that "$C_2H_5OH$ ON" and "$C_2H_5OH$ OFF" in the Figure 9 indicate respectively the point in time at which the air containing $C_2H_5OH$ was introduced to the sensor and the point in time at which the air containing $C_2H_5OH$ was replaced by air.

EXAMPLE 9

The procedure of Example 5 was followed using a sensor of the type used therein (i.e. Au/ZnO/Pt) with the exception that air containing hydrogen was not used and alternately air and air containing 1% $NH_3$ was passed over the sensor.

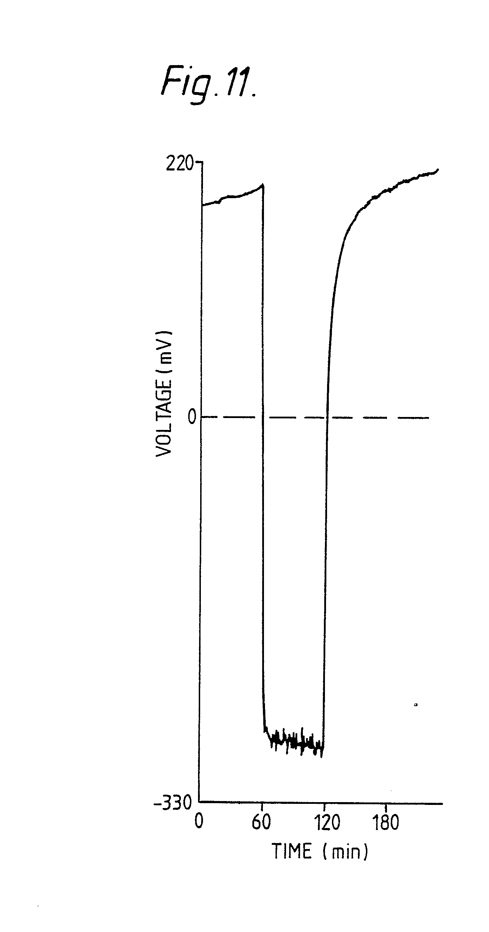

The voltage response of the sensor to $NH_3$ is shown in Figure 10.

With air passing over the sensor a rest voltage was observed as shown; upon contacting the sensor with 1% $NH_3$ in air the voltage decreased as shown in Figure 10.

It will be appreciated that "$NH_3$ ON" and "$NH_3$ OFF" in Figure 10 indicate respectively the point in time at which air containing 1% $NH_3$ was introduced to the sensor and the point in time at which air containing 1% $NH_3$ was replaced by air.

EXAMPLE 10

A sensor of the form shown in Figure 1 of the accompanying drawings was used to detect hydrogen in air.

The sensor had a support material of perfluoro sulphuric acid membrane (available under the Trade Name "Nafion") having a Au electrode provided by sputtering and a Pt electrode provided by sputtering.

The Au and Pt electrodes were connected to a voltage measuring device (DVM) via Cu wires.

A thin film of water was allowed to form from the atmosphere onto the membrane and between the electrodes to serve as a liquid electrolyte.

The sensor was placed in an enclosure and a stream of air was passed over the sensor. After 60 minutes the stream of air was replaced by a stream of 1% $H_2$ in air.

After a further 60 minutes the stream of 1% $H_2$ in air was replaced by a stream of air.

The voltage response of this sensor is shown in Figure 11. With air passing over the sensor a rest voltage was observed as shown; upon contacting the sensor with 1% $H_2$ in air (at time 60 minutes) the voltage decreased as shown in Figure 11.

On replacing the steam of 1% $H_2$ in air with a steam of air (at time 120 minutes) the voltage increased as shown in Figure 11.

**Claims**

1. A gas sensor comprising a liquid electrolyte (4) and two or more electrodes (2, 3) in communication with the said liquid electrolyte and capable of being contacted with a gas or gaseous mixture, the arrangement being such that two or more of the electrodes produce different potentials when in contact with the said gas or gaseous mixture.

2. A gas sensor as claimed in Claim 1 wherein the liquid electrolyte as in the form of a thin layer or film.

3. A gas sensor as claimed in Claim 2 wherein the liquid electrolyte comprises a thin film of water or a thin film of an aqueous solution.

4. A gas sensor as claimed in Claim 2 or Claim 3 wherein the liquid electrolyte is in the form of a thin layer or a thin film and the thin layer or thin film is supported by a support material (1).

5. A gas sensor as claimed in Claim 4 wherein the support material comprises tin oxide, or zinc oxide, or aluminium oxide.

6. A gas sensor as claimed in Claim 6 wherein the organic material is an organic membrane.

7. A gas sensor as claimed is any one of Claims 4 to 7 wherein the liquid electrolyte is formed by forming a thin layer of water, or a thin layer of an aqueous solution, on the support material.

8. A gas sensor as claimed in any one of Claims 1 to 8 wherein the liquid electrolyte is formed by deposition as moisture on the support material.

9. A gas sensor as claimed in any one of the preceding claims when the gas sensor involves a means for measuring potential, or a difference in potentials, developed by the electrodes.

10. A gas sensor as claimed in any one of Claims 1 to 13 wherein the sensor includes a means for measuring current.

11. A method of sensing a gas which comprises contacting a sensor with the gas and measuring the electrical potential response of the sensor, said sensor comprising a liquid electrolyte, and two or more electrodes in communication with the said liquid electrolyte, the arrangement being such that two or more of the electrodes produce different potentials when in contact with the gas, and said electrolyte and said electrodes being in contact with the gas.

12. A method as claimed in Claim 11 wherein hydrogen carbon monoxide, ammonia, sulphur dioxide or hydrogen sulphide is detected in air.

*Fig.1.*

*Fig. 2.*

## Fig. 3.

## Fig. 4.

Fig.5.

Fig.6.

Fig.7.

## Fig. 8.

H₂S on

H₂S off

VOLTAGE (mV)

200
180
160
140
120
100
80
60

4 min

## Fig. 9.

C₂H₅OH on

VOLTAGE (mv)

200

150

100

50

C₂H₅OH off

4min

## Fig. 10.

NH₃ on

NH₃ off

VOLTAGE (mv)

200

150

100

50

4 min

# Fig.11.